# EUROPÄISCHE PATENTSCHRIFT

(11) **EP 2 653 789 B1**
(45) Veröffentlichungstag und Bekanntmachung des Hinweises auf die Patenterteilung: **15.01.2020**
(21) Anmeldenummer: 13156578.0
(22) Anmeldetag: 25.02.2013
(51) Int. Cl.: F24D 3/12, F24D 19/10, F24D 3/14, F24F 3/06, G05D 23/08, G05D 23/19, F24F 5/00, F24F 11/72

(54) **Verfahren und System zum Temperieren von Bauteilen**
Method and system for tempering components
Procédé et système destinés à tempérer des composants

(30) Priorität: 29.02.2012 CH 2662012
(43) Veröffentlichungstag der Anmeldung: 23.10.2013
(73) Patentinhaber: Oblamatik AG, 7000 Chur (CH)
(72) Erfinder: Lang, Edo, 7000 Chur (CH); Obrist, Roland, 7412 Scharans (CH)
(74) Vertreter: OK pat AG

(56) Entgegenhaltungen:
- EP-A2- 1 744 105
- DE-A1- 19 911 866
- DE-A1-102009 004 319
- FR-A1- 2 931 226

## Beschreibung

Die Erfindung betrifft ein Temperierverfahren zum Temperieren, also zum Heizen oder Kühlen eines Bauteils. Derartige Bauteile sind z.B. ein Boden, eine Wand oder eine Decke eines Wohn- oder Arbeits-Raums; es können aber auch alleinstehende Heiz- oder Kühlwände sein. Ein zur Durchführung dieses Temperierverfahrens geeignetes Temperiersystem umfasst typischerweise eine Temperiervorrichtung, eine Temperieranordnung, eine Vorlaufleitung und eine Rücklaufleitung, die alle miteinander verbunden sind. Dieses Temperiersystem umfasst zudem eine Steuerung und Regeleinheit mit einem Stellglied, einem Vorlauftemperaturfühler und einem Rücklauftemperaturfühler.

Bei aus dem Stand der Technik bekannten Temperiersystemen erfolgt die Einstellung des Durchflusses des Temperierfluids üblicherweise statisch mittels mechanischen Durchflussstellgliedern. Die thermischen Stellglieder sind dabei als Zweipunktregelung ausgelegt und die abzugebende Energie eines beispielsweise als Heizsystem ausgelegten Temperiersystems wird im Wesentlichen durch einen aufwendigen hydraulischen Abgleich der TOP-Meter eingestellt. Diese TOP-Meter sind Stellglieder, die den Durchfluss des Temperierfluids in einem Heizkreis bestehend aus Vorlauf, Bodenheizung (= Temperieranordnung) und Rücklauf statisch einstellen. Allerdings benötigt der Installateur Kenngrössen zur Einstellung des zu erzielenden Durchflusses. Die Kenngrössen werden aber durch den Rohrdurchmesser (Verschlammung) und den Fliessdruck (z.B. durch Öffnen und Schliessen mehrerer Parallelstränge) des Temperierfluids beeinflusst. Die daraus resultierende Vor- und Rücklauftemperatur wird weiter durch die Vorlauftemperatur und die Temperatur der Temperieranordnung beeinflusst. Trotz Erfahrung und Anwendung grösster Sorgfalt ist deshalb jedoch nur ein ungenaues Einstellen der einzelnen Stränge oder Heizkreise möglich. Daraus resultiert eine ungleichmässige Wärmeverteilung einerseits, beziehungsweise eine ungenügende Energieeffizienz andererseits. Weiter sind bei Umbauten die theoretisch ermittelten Stellgrössen nicht verfügbar und nur mit grossem Aufwand ermittelbar. Ein weiteres Problem stellen ungenaue Raumthermostaten dar, die oft eine einfache Ein/Aus-Funktion auf eine derartige Bodenheizung ausüben.

Obwohl es Ansätze zur genaueren Ermittlung des Energieverbrauchs von Heizsystemen gibt (vgl. z.B. DE 44 17 941 A1), so fehlen bis heute jedoch Konzepte, die wesentlichen Nachteilen des eben beschriebenen Standes der Technik erfolgreich begegnen können. Beispiele von einem Verfahren zum Temperieren eines Bauteils sind aus DE 10 2009 004 319 A1 oder aus FR 2 931 226 A1 bekannt. Keines der Dokumente offenbart ein Temperiersystem, in dem ein einzelner Raum mindestens von zwei Temperier-Kreisläufen versorgt wird.

Es ist deshalb die Aufgabe der vorliegenden Erfindung, ein Temperierverfahren sowie ein zur Durchführung dieses Verfahrens geeignetes Temperiersystem zum Heizen oder Kühlen eines Bauteils vorzuschlagen, welche die wesentlichen, aus dem Stand der Technik bekannten Nachteile eliminieren oder zumindest minimieren. Es wird insbesondere bevorzugt, dass dieses Temperierverfahren eine deutlich gleichmässigere Energieabgabe an Bauteile oder eine deutlich gleichmässigere Energieaufnahme von Bauteilen ermöglicht und damit den Komfort und die Energieeffizienz steigert.

Zum Zweck einer besseren Übersichtlichkeit wird im Folgenden im Zusammenhang mit Temperierverfahren bzw. Temperiersystemen vorwiegend von Heizverfahren bzw. Heizsystemen gesprochen; sinngemäss gelten diese Ausführungen aber auch für Kühlverfahren bzw. Kühlsysteme.

Erfindungsgemäß wird ein komplexeres Temperierverfahren mit den Merkmalen des unabhängigen Anspruchs ¹ angewendet Dieses erfindungsgemässe Verfahren zum Temperieren eines Bauteils wird mit einem komplexeren Temperiersystem durchgeführt, das umfasst:
- eine zum Heizen oder Kühlen eines Temperierfluids ausgebildete Temperiervorrichtung;
- 2 bis **n** Temperieranordnungen zum Durchleiten des Temperierfluids durch das zu temperierende Bauteil, wobei die 2 bis **n** Temperieranordnungen über eine gemeinsame Vorlaufleitung mit der Temperiervorrichtung verbunden sind;
- 2 bis **n** Rücklaufleitungen zum Rückleiten des Temperierfluids von den 2 bis **n** Temperieranordnungen zu der Temperiervorrichtung;
- 2 bis **n** Rücklauftemperaturfühler, wobei jeder Rücklauftemperaturfühler an oder in einer der Rücklaufleitungen und der Vorlauftemperaturfühler an oder in der gemeinsamen Vorlaufleitung angeordnet ist;
- eine Steuerung;
- 2 bis **n** Ventile, die mit je einem Stellglied ausgerüstet und in je eine separate Vorlaufleitung nach einem Vorlauf-Verteilerbalken oder in je eine der Rücklaufleitungen, vorzugsweise vor einem optionalen Rücklauf-Verteilerbalken, eingesetzt sind, wobei die Stellglieder zum Einstellen eines Öffnungsgrades des jeweiligen Ventils ausgebildet sind, und wobei die Steuerung zum Ansteuern der Stellglieder ausgebildet ist, wobei die Steuerung einen Regler umfasst.

Der Regler erfasst die jeweiligen individuellen Temperaturdifferenzen zwischen der gemeinsamen, durch den Vorlauftemperaturfühler erfassten Vorlauftemperatur und den 2 bis **n** individuellen durch die Rücklauftemperaturfühler erfassten Rücklauftemperaturen des Temperierfluids.

Ausgehend von diesen individuellen Temperaturdifferenzen veranlasst der Regler die Stellglieder der 2 bis **n** Ventile derart zum Einstellen des Öffnungsgrades dieser Ventile, dass die individuellen mittleren Temperaturdifferenzen zwischen der Vorlauftemperatur und der jeweiligen Rücklauftemperatur des Temperierfluids in je einem vorbestimmten Wertebereich liegen, welcher 1° C bis 10° C beträgt, und wobei das zu temperierende Bauteil ein Boden, eine Wand oder eine Decke eines Wohn- oder Arbeits-Raums oder eine alleinstehende Heiz- oder Kühlwand ist.

Alternativ oder ergänzend kann auch ein komplexeres Temperiersystem mit den Merkmalen des abhängigen Anspruchs 4 verwendet werden. Dieses zum Durchführen des erfindungsgemässen Temperierverfahrens geeignete Temperiersystem für ein Bauteil umfasst:
- ein zum Heizen oder Kühlen eines Temperierfluids ausgebildete Temperiervorrichtung;
- 2 bis **n** Temperieranordnungen zum Durchleiten des Temperierfluids durch das zu temperierende Bauteil, wobei die 2 bis **n** Temperieranordnungen über eine gemeinsame Vorlaufleitung mit der Temperiervorrichtung verbunden sind;
- 2 bis **n** Rücklaufleitungen zum Rückleiten des Temperierfluids von den 2 bis **n** Temperieranordnungen zu der Temperiervorrichtung;
- 2 bis **n** Rücklauftemperaturfühler, wobei jeder Rücklauftemperaturfühler an oder in einer der Rücklaufleitungen und der Vorlauftemperaturfühler an oder in der gemeinsamen Vorlaufleitung angeordnet ist;
- eine Steuerung , die einen Regler umfasst;
- 2 bis **n** Ventile, die mit je einem Stellglied in je eine separate Vorlaufleitung nach einem Vorlauf-Verteilerbalken oder in je eine der Rücklaufleitungen, vorzugsweise vor einem optionalen Rücklauf-Verteilerbalken, eingesetzt sind, wobei die Stellglieder zum Einstellen eines Öffnungsgrades des jeweiligen Ventils ausgebildet sind, und wobei die Steuerung zum Ansteuern der Stellglieder ausgebildet ist;
- wobei das zu temperierende Bauteil ein Boden, eine Wand oder eine Decke eines Wohn- oder Arbeits-Raums oder eine alleinstehende Heiz- oder Kühlwand ist.

Weitere erfinderische und bevorzugte Weiterbildungen und Merkmale ergeben sich aus den abhängigen Ansprüchen.

Vorteile des erfindungsgemässen Temperierverfahrens bzw. des erfindungsgemässen Temperiersystems umfassen:
- Die Energieabgabe wird im Wesentlichen vom aktuellen Unterschied zwischen der Vorlauftemperatur und der Rücklauftemperatur bestimmt, damit ist das Temperiersystem weitestgehend unabhängig von der Vorlauftemperatur, trotzdem wird eine Schnellaufheizung ermöglicht;
- Weil die Regelung aktiv erfolgt, kann die Vorlauftemperatur niedrig gehalten und damit die Heizkosten minimiert werden;
- Der Einfluss von Störgrössen (Heizquellen, wie Kaminfeuer oder Kühlquellen wie offene Fenster) kann minimiert werden: Ein Fenster öffnen erzeugt beispielsweise keinen zusätzliche Heizbedarf, Besonnung reduziert sogar den Heizbedarf; in Hotels sind beispielsweise keine besonderen Fensterschalter notwendig;
- Durch die erzielbare gleichmässige Wärmverteilung geniesst der Verbraucher konstant (auch bei teilweiser Verschlammung) einen höheren Komfort;
- Auf die Verwendung von TOP-Metern und damit auf einen iterativen hydraulischen Abgleich vor Ort kann verzichtet werden, zudem wird die Anzahl der beweglichen Teile des Temperiersystems auf ein Minimum reduziert, beides erhöht die Zuverlässigkeit dieser Systeme und es entsteht kein Einstell-Berechnungs-Aufwand mehr für den Planer und Installateur;
- Das Temperiersystem ist flexibel und praktisch beliebig ausbaubar, es funktioniert auch ohne Bodentemperaturfühler, weil die Vorlauftemperatur und die Rücklauftemperatur gemessen werden.

Das erfindungsgemässe Temperierverfahren bzw. das erfindungsgemässe Temperiersystem werden nun an Hand von schematischen Zeichnungen und bevorzugten Ausführungsformen, welche den Umfang der Erfindung nicht begrenzen sollen, sowie an Hand von Messresultaten näher erläutert. Dabei zeigt:
- Fig. 1: eine schematische Aufsicht auf ein einfacheres Temperiersystem, welches nicht Teil der Erfindung ist;
- Fig. 2: eine schematische Teil-Aufsicht auf die Steuerung eines einfacheren Temperiersystems, welches nicht Teil der Erfindung ist;
- Fig. 3: eine schematische Aufsicht auf ein komplexeres Temperiersystem; gemäß der Erfindung;
- Fig. 4: eine Auswahl von Stellglied/Regler-Kombinationen, wobei:
Fig. 4A ein als Regler ausgebildetes Bimetall-Stellglied;
Fig. 4B ein Expansions-Stellglied in Kombination mit einem Schmitt-Trigger;
Fig. 4C einen als Elektromotor ausgebildetes Stellglied in Kombination mit einem Differenz-Verstärker; und
Fig. 4D ein Solenoid-Stellglied in Kombination mit einem Mikroprozessor zeigt;
- Fig. 5A: den Temperaturverlauf bei einem konstanten Fluss des Temperierfluids von 2.5 l/min und mit einer daraus resultierenden Temperaturdifferenz zwischen Vorlauftemperatur und Rücklauftemperatur von etwa 2.0 °C;
- Fig. 5B: den Temperaturverlauf bei einem konstanten Fluss des Temperierfluids von 0.5 l/min und mit einer daraus resultierenden Temperaturdifferenz zwischen Vorlauftemperatur und Rücklauftemperatur von etwa 4.0 °C;
- Fig. 6: den Temperaturverlauf mit einer Regelung, bei der das Ventil pulsweise geöffnet und wieder geschlossen wurde;
- Fig. 7: das Resultat eines an einem Wohnraumboden mit zwei Heizkreisen durchgeführten Temperierverfahrens.

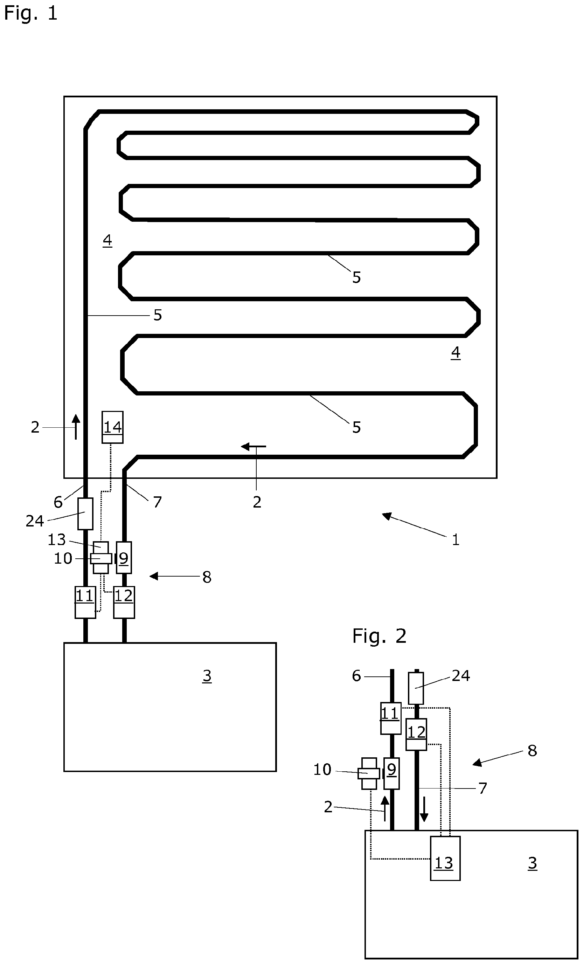

Die Figur 1 zeigt eine schematische Aufsicht auf ein einfacheres Temperiersystem, welches nicht Teil der Erfindung ist. Dieses Temperiersystem eignet sich zum Durchführen des erfindungsgemässen Verfahrens zum Temperieren eines Bauteils. Dieses einfachere Temperiersystem 1 zum Durchführen des erfindungsgemässen Temperierverfahrens umfasst eine zum Heizen oder Kühlen eines Temperierfluids 2 ausgebildete Temperiervorrichtung 3. Dieses einfachere Temperiersystem 1 umfasst zudem eine zum Durchleiten des Temperierfluids 2 durch ein zu temperierendes Bauteil 4 ausgebildete Temperieranordnung 5 (in der beispielhaften Form eines in das Bauteil 4 verlegten, mäandrierenden Rohrs).

Dieses einfachere Temperiersystem 1 umfasst zudem eine Vorlaufleitung 6, über welche die Temperiervorrichtung 3 mit der Temperieranordnung 5 zum Zuleiten des Temperierfluids 2 verbunden ist, sowie eine Rücklaufleitung 7, über welche die Temperieranordnung 5 mit der Temperiervorrichtung 3 zum Rückleiten des Temperierfluids 2 verbunden ist. Dieses einfachere Temperiersystem 1 umfasst zudem eine Steuerung 8. Diese Steuerung 8 umfasst ein Ventil 9 mit einem Stellglied 10, wobei dieses Stellglied 10 zum Einstellen eines Öffnungsgrades des in die Vorlaufleitung 6 oder in die Rücklaufleitung 7 des einfacheren Temperiersystems 1 eingesetzten Ventils 9 ausgebildet ist.

Überdies umfasst die Steuerung 8 einen Vorlauftemperaturfühler 11 und einen Rücklauftemperaturfühler 12. Diese Steuerung 8 ist zum Ansteuern des Stellglieds 10 ausgebildet. Der Vorlauftemperaturfühler 11 ist zum Erfassen einer Vorlauftemperatur des Temperierfluids 2 und der Rücklauftemperaturfühler 12 ist zum Erfassen einer Rücklauftemperatur des Temperierfluids 2 ausgebildet. Die Steuerung 8 des erfindungsgemässen, einfacheren Temperiersystems 1 umfasst des Weiteren einen Regler 13, der zum Erfassen einer Temperaturdifferenz zwischen der Vorlauftemperatur und der Rücklauftemperatur des Temperierfluids 2 ausgebildet ist. Dabei ist der Regler 13 so ausgebildet, dass er ausgehend von dieser Temperaturdifferenz das Stellglied 10 des Ventils 9 derart zum Einstellen des Öffnungsgrades des Ventils 9 veranlasst, dass die mittlere Temperaturdifferenz zwischen der Vorlauftemperatur und der Rücklauftemperatur des Temperierfluids 2 in einem vorbestimmten Wertebereich liegt.

Mit dem Vorlauftemperaturfühler 11 wird eine Vorlauftemperatur des Temperierfluids 2 und mit dem Rücklauftemperaturfühler 12 eine Rücklauftemperatur des Temperierfluids 2 erfasst. Mit einem Regler 13, der von der Steuerung 8 umfasst ist, wird eine Temperaturdifferenz zwischen der Vorlauftemperatur und der Rücklauftemperatur des Temperierfluids (2) erfasst. Ausgehend von dieser Temperaturdifferenz veranlasst der Regler 13 das Stellglied 10 des Ventils 9 derart zum Einstellen des Öffnungsgrades dieses Ventils 9, dass die mittlere Temperaturdifferenz zwischen der Vorlauftemperatur und der Rücklauftemperatur des Temperierfluids 2 in einem vorbestimmten Wertebereich liegt. Die Vorlauftemperatur des Temperierfluids 2 wird vorzugsweise in der Vorlaufleitung 6 und die Rücklauftemperatur des Temperierfluids 2 wird vorzugsweise in der Rücklaufleitung 7 erfasst. Besonders bevorzugt liegen beide Temperaturfühler 11,12 ausserhalb des Bauteils 4 (also am "Anfang" oder "Ende" der Temperieranordnung 5) und sind somit jederzeit beispielsweise für Wartungsarbeiten zugänglich.

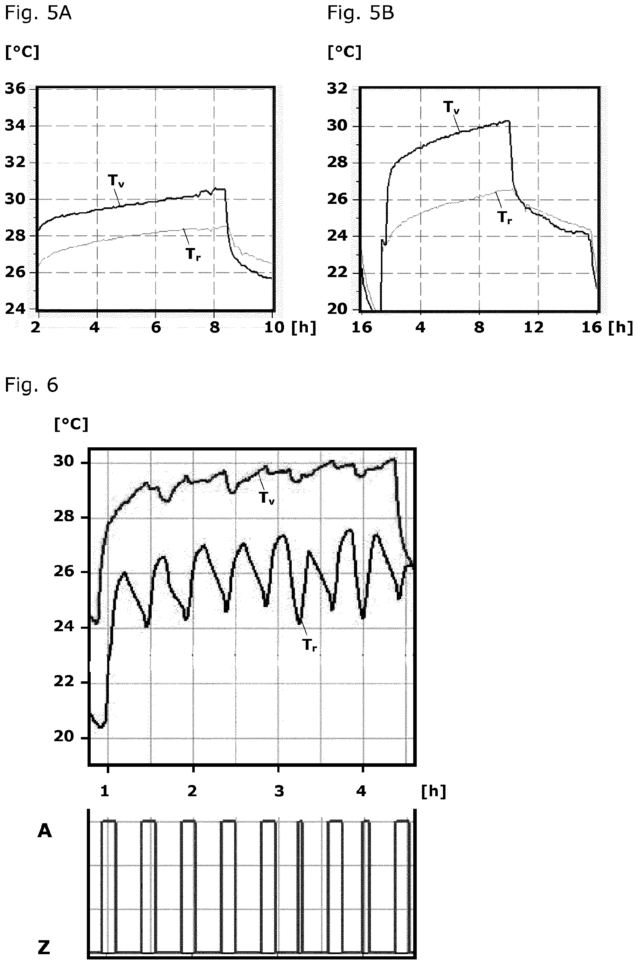

Die Temperaturdifferenz zwischen der Vorlauftemperatur und der Rücklauftemperatur kann konstant (vgl. Fig. 5) oder variabel, beispielsweise oszillierend (vgl. Fig. 6) sein und unterschiedliche Werte annehmen. Um diesen unterschiedlichen Betriebszuständen zu entsprechen, wird deshalb von einer mittleren Temperaturdifferenz gesprochen. Der vorbestimmte Wertebereich für diese mittlere Temperaturdifferenz umfasst vorzugsweise weniger als 20 °C und beträgt bevorzugt 1 bis 10 °C und besonders bevorzugt 2 bis 6 °C.

Sobald der Regler 13 feststellt, dass die gemessene Vorlauftemperatur einen vorbestimmten Wert erreicht, veranlasst das Stellglied 10 das Schließen des Ventils 9. Diese Vorschrift ist besonders dann sinnvoll, wenn z.B. beim Heizen eines Wohnzimmerbodens 4 der Regler feststellt, dass die Vorlauftemperatur die Rücklauftemperatur um einen zu grossen Wert übertrifft. Mit diesem vorzugsweise temporären Schliessen des Ventils 9 kann ein Überhitzen des Wohnzimmerbodens verhindert werden. Dadurch wird z.B. ein Beschädigen des Bodenbelags (z.B. Parkett) verhindert.

Aus Temperaturdaten, die mit einem Thermostaten 14 des einfacheren Temperiersystems 1 erfasst und bereitgestellt wurden, wird eine Temperaturdifferenz zwischen einer aktuellen Raumtemperatur und einer gewählten Solltemperatur erfasst wird, und dass ein in der Vorlaufleitung 6 oder in der Rücklaufleitung 7 angeordnetes Abschlussventil 24 entsprechend einem bestimmten Wert dieser Temperaturdifferenz geöffnet oder geschlossen wird. Diese Vorschrift ist besonders dann sinnvoll, wenn eine 2 Punkt-Regelung verwendet werden soll, um eine maximale Temperaturdifferenz von beispielsweise 2 °C zwischen der Soll-Temperatur und der Ist-Temperatur (Raumtemperatur) einzustellen.

Mit dem Regler 13 der Steuerung 8 und mit einem Raumthermometer wird zudem eine Ist-Temperatur eines Raumes in der Nähe des Bauteils 4 erfasst wobei der Regler 13, sobald er feststellt, dass die gemessene Vorlauftemperatur von der Ist-Temperatur um einen vorbestimmten Wertebereich abweicht, das Stellglied 10 zum Schliessen des Ventils 9 veranlasst. Diese Vorschrift ist besonders dann sinnvoll, wenn z.B. beim Heizen eines Wohnzimmerbodens 4 die Raumtemperatur unerwartet ansteigt (z.B. durch Sonneneinstrahlung oder den Betrieb eines Kaminfeuers). Dieser Wertebereich kann den tatsächlichen Gegebenheiten angepasst werden beträgt beispielsweise 10 °C, 5 °C oder 2 °C. Mit diesem vorzugsweise temporären Schliessen des Ventils 9 kann verhindert werden, dass dem Wohnzimmerboden durch eine zu tiefe Vorlauftemperatur ungewollt Wärme entzogen wird. Beim Heizen liegen diese Wertebereiche typischerweise unterhalb der Ist-Temperatur; beim Kühlen liegen diese Wertebereiche typischerweise über der Ist-Temperatur.

Fig. 1 zeigt eine schematische Aufsicht auf ein einfacheres Temperiersystem 1, welches nicht Teil der Erfindung ist, bei dem die Fühler für die Vorlauftemperatur 11 und die Rücklauftemperatur 12 nahe beim hier in die Rücklaufleitung 7 eingesetzten Ventil 9 angeordnet sind. Das Stellglied 10 mit dem Regler 13 ist unmittelbar beim Ventil 9 angeordnet. Der Regler 13 ist elektrisch mit dem Vorlauftemperaturfühler 11 und mit dem Rücklauftemperaturfühler 12 verbunden, was hier durch gepunktete Linien dargestellt ist. Das Abschlussventil 24 ist hier in die Vorlaufleitung 6 eingesetzt. Damit befindet sich die gesamte Steuerung 8 ausserhalb des Bauteils 4 und auch ausserhalb der Temperiervorrichtung 3.

Vergleichbar dazu zeigt die Figur 2 eine schematische Teil-Aufsicht auf die Steuerung eines einfacheren Temperiersystems, welches nicht Teil der Erfindung ist, bei dem die Fühler für die Vorlauftemperatur 11 und die Rücklauftemperatur 12 nahe beim hier in die Vorlaufleitung 6 eingesetzten Ventil 9 angeordnet sind. Das Stellglied 10 ist wieder unmittelbar beim Ventil 9 angeordnet. Der Regler 13 befindet sich in einer praktisch beliebigen Entfernung zu den bisher genannten Bauteilen der Steuerung 8 und befindet sich in der Nähe der Temperiervorrichtung 3 oder ist sogar in die letztere integriert. Der Regler 13 ist elektrisch mit dem Vorlauftemperaturfühler 11 und mit dem Rücklauftemperaturfühler 12 sowie mit dem Stellglied 10 verbunden, was hier durch gepunktete Linien dargestellt ist. Das Abschlussventil 24 ist hier in die Rücklaufleitung 7 eingesetzt. Damit verteilt sich die Steuerung 8 auf einen Bereich ausserhalb des Bauteils 4 und auf einen Bereich bei oder innerhalb der Temperiervorrichtung 3.

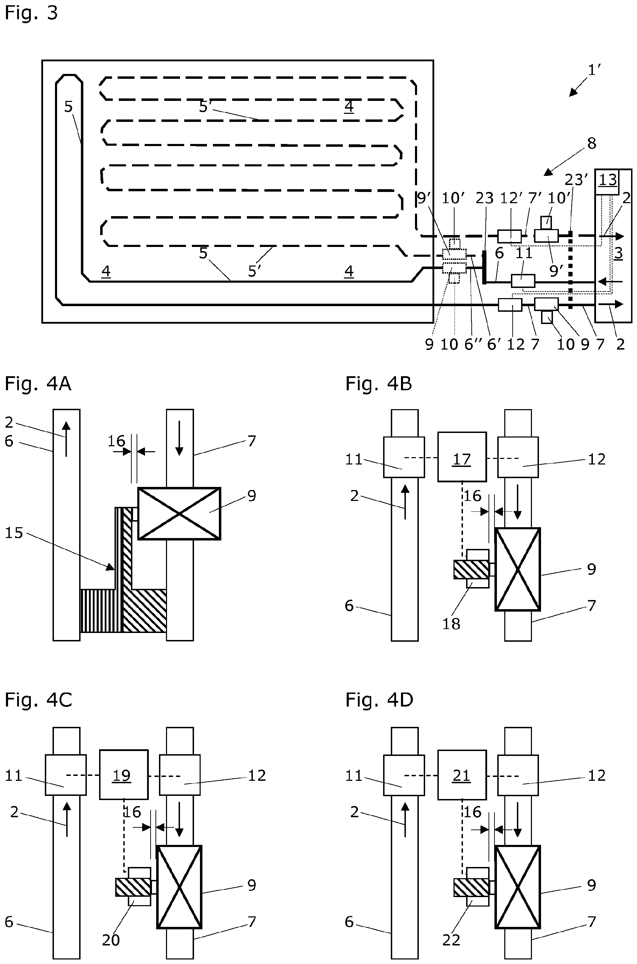

Die Figur 3 zeigt eine schematische Aufsicht auf ein komplexeres Temperiersystem 1' gemäß der Erfindung zur Durchführung des erfindungsgemässen Verfahrens zum Temperieren von Bauteilen 4, wobei unterschiedliche Ausführungsvarianten dargestellt sind. Dieses komplexere Temperiersystem 1' umfasst zwei Temperieranordnungen 5,5' (jeweils in der beispielhaften Form von in das Bauteil 4 schleifenartig oder mäandrierend verlegten Rohren) zum Durchleiten des Temperierfluids 2 durch das zu temperierende Bauteil 4. Dabei sind die 2 Temperieranordnungen 5,5' über eine gemeinsame Vorlaufleitung 6 mit der Temperiervorrichtung 3 verbunden.

Dieses komplexere Temperiersystem 1' umfasst zudem zwei Rücklaufleitungen 7,7' zum Rückleiten des Temperierfluids 2 von den zwei Temperieranordnungen 5,5' zu der Temperiervorrichtung 3.

Dieses komplexere Temperiersystem 1' umfasst des Weiteren zwei Rücklauftemperaturfühler 12,12', wobei jeder Rücklauftemperaturfühler 12,12' an oder in einer der Rücklaufleitungen 7,7' und der Vorlauftemperaturfühler 11 an oder in der gemeinsamen Vorlaufleitung 6 angeordnet ist.

Dieses komplexere Temperiersystem 1' umfasst ausserdem zwei Ventile 9,9', die mit je einem Stellglied 10,10' ausgerüstet und in je eine separate Vorlaufleitung 6',6" nach einem Vorlauf-Verteilerbalken 23 oder in je eine der Rücklaufleitungen 7,7', vorzugsweise vor einem optionalen Rücklauf-Verteilerbalken 23', eingesetzt sind. Dabei sind die Stellglieder 10,10' zum Einstellen eines Öffnungsgrades des jeweiligen Ventils 9,9' ausgebildet und die Steuerung 8 ist zum Ansteuern der Stellglieder 10,10' ausgebildet.

Dieses komplexere Temperiersystem 1' kann wie gezeigt, zwei Temperieranordnungen 5,5' aufweisen, es können aber auch mehr als zwei (also n) Temperieranordnungen sein. Entsprechend der Anzahl der Temperieranordnungen steigt folgerichtig auch die Anzahl an Rücklaufleitungen 7,7', Rücklauftemperaturfühlern 12,12', Ventilen 9,9' und Stellgliedern 10,10', so dass bei allen diesen Bauteilen bei einem komplexeren Temperiersystem 1' mit einer Zahl von 2 bis **n** gerechnet werden kann. In jedem Fall wird jedoch bevorzugt, dass die 2 bis **n** Temperieranordnungen 5,5' über eine gemeinsame Vorlaufleitung 6 mit der Temperiervorrichtung 3 verbunden sind.

Falls es wie gezeigt nur zwei Temperieranordnungen 5,5' aufweist, kann dieses komplexere Temperiersystem 1' einen Vorlauf-Verteilerbalken 23 oder alternativ dazu ein einfaches T-Stück zur Verbindung der gemeinsamen Vorlaufleitung 6 mit den separaten Vorlaufleitung 6',6" umfassen. Wenn ein komplexeres Temperiersystem 1' mehr als zwei separate Vorlaufleitungen 6',6" umfasst, so wird der Fachmann typischerweise immer einen Vorlauf-Verteilerbalken 23 vorsehen. Falls es wie gezeigt nur zwei Temperieranordnungen 5,5' aufweist, kann dieses komplexere Temperiersystem 1' zwei getrennte Rücklaufleitungen 7,7' aufweisen; diese beiden Rücklaufleitungen 7,7' können aber alternativ dazu über einen Rücklauf-Verteilerbalken 23' oder alternativ dazu über ein einfaches T-Stück und dann eine gemeinsame Rücklaufleitung mit der Temperiervorrichtung 3 verbunden werden. Wenn ein komplexeres Temperiersystem 1' mehr als zwei Temperieranordnungen 5,5' aufweist, so wird der Fachmann typischerweise immer einen Rücklauf-Verteilerbalken 23' vorsehen.

Entsprechend der gewählten Bauteilkonfiguration können nun die 2 bis **n** Ventile 9,9', die mit je einem Stellglied 10,10' ausgerüstet sind, in je eine separate Vorlaufleitung 6',6" (in Fig. 3 gepunktet gezeichnet und in der Flussrichtung gesehen) nach einem Vorlauf-Verteilerbalken 23 (fett ausgezogen gezeichnet) oder alternativ dazu in je eine der Rücklaufleitungen 7,7' eingesetzt werden. Das Einsetzen der 2 bis **n** Ventile 9,9' in je eine der Rücklaufleitungen 7,7' erfolgt vorzugsweise (in der Flussrichtung gesehen) vor einem Rücklauf-Verteilerbalken 23' (fett gepunktet gezeichnet), falls ein solcher Rücklauf-Verteilerbalken 23' vorgesehen ist.

In der Fig. 3 sind die Fühler für die Vorlauftemperatur 11 bzw. für die Rücklauftemperatur 12,12' nahe dem Vorlauf-Verteilerbalken 23 bzw. nahe dem RücklaufVerteilerbalken 23' angeordnet. Die Ventile 9,9' sind mit den dazu gehörenden Stellgliedern 10,10' in der Nähe der Rücklauftemperaturfühler 12,12' und vor dem Rücklauf-Verteilerbalken 23' oder alternativ dazu nach dem Vorlauf-Verteilerbalken 23 angeordnet. Besonders bevorzugt liegen die Temperaturfühler 11,12,12' ausserhalb des Bauteils 4 (also am "Anfang" oder "Ende" der Temperieranordnungen 5,5') und sind somit jederzeit beispielsweise für Wartungsarbeiten zugänglich.

Der Einfachheit halber sind die elektrischen Verbindungen zwischen den Stellgliedern 10,10' und dem in der Temperiervorrichtung 3 angeordneten Regler 13 hier nicht gezeigt. Der Regler 13 ist elektrisch ebenfalls mit dem Vorlauftemperaturfühler 11 und mit den Rücklauftemperaturfühlern 12,12' verbunden, was hier durch gepunktete Linien dargestellt ist. Das Abschlussventil 24 ist üblicherweise in die Rücklaufleitung 7 eingesetzt. Damit verteilt sich die Steuerung 8 auf einen Bereich ausserhalb des Bauteils 4 und auf einen Bereich bei oder innerhalb der Temperiervorrichtung 3. In diesem Beispiel wurde auf ein Abschlussventil 24 verzichtet.

Das erfindungsgemässe Verfahren wird mit einem solchen komplexeren Temperiersystem 1' durchgeführt, indem der Regler 13 die jeweiligen Temperaturdifferenzen zwischen der gemeinsamen, durch den Vorlauftemperaturfühler 11 erfassten Vorlauftemperatur und den zwei (allgemein 2 bis **n**) individuellen durch die Rücklauftemperaturfühler 12,12' erfassten Rücklauftemperaturen des Temperierfluids 2 erfasst. Dabei wird mit dem Regler 13 der Steuerung 8 je eine individuelle Temperaturdifferenz zwischen der Vorlauftemperatur und je einer der beiden (allgemein 2 bis **n**) Rücklauftemperaturen des Temperierfluids 2 erfasst. Ausgehend von diesen individuellen Temperaturdifferenzen veranlasst der Regler 13 die Stellglieder 10,10' der beiden (allgemein 2 bis **n**) Ventile 9,9' derart zum Einstellen des Öffnungsgrades dieser Ventile 9,9', dass die individuellen mittleren Temperaturdifferenzen zwischen der Vorlauftemperatur und der jeweiligen Rücklauftemperatur des Temperierfluids 2 in je einem vorbestimmten Wertebereich liegen.

Beim Durchführen dieses Temperierverfahrens kann vorgesehen werden, dass die durch den Regler 13 geregelten Wertebereiche der Temperaturdifferenzen und Durchflüsse in den beiden (allgemein 2 bis **n**) Temperieranordnungen 5,5' unterschiedlich sind.

Beim Durchführen dieses Temperierverfahrens kann auch vorgesehen werden, dass die vorbestimmten Wertebereiche der durch den Regler 13 geregelten Temperaturdifferenzen 1 °C bis 10 °C, vorzugsweise 2 °C bis 6 °C, betragen. Ausserdem kann vorgesehen werden, dass durch den Regler 13 geregelte Durchflüsse in den Temperieranordnungen 5,5' 0.2 l/min bis 10 l/min betragen.

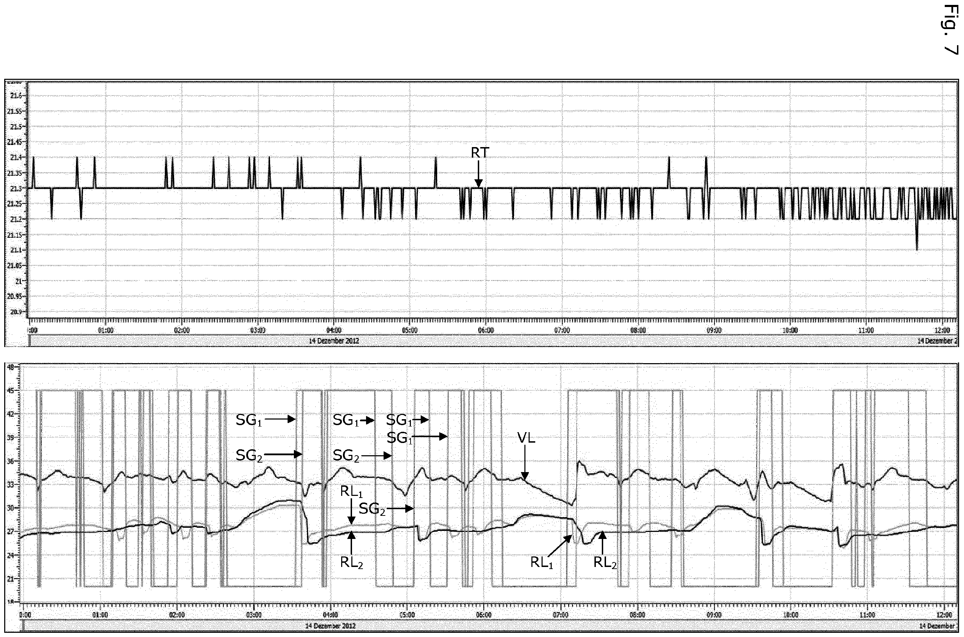

In einem Ausführungsbeispiel eines erfindungsgemässen Temperierverfahrens (vgl. Fig. 7) wurde ein Wohnraumboden mit einer totalen Oberfläche von 40 m² mit zwei Heizkreisen, d.h. mit zwei Temperieranordnungen 5,5' eines derartigen komplexeren Temperiersystems 1' ausgerüstet. Dabei versorgte die erste Temperieranordnung 5 eine erste Teilfläche von 20 m² und die zweite Temperieranordnung 5' eine zweite Teilfläche von 20 m² des Wohnraumbodens. Beide Temperieranordnungen 5,5' wurden über eine gemeinsame Vorlauflaufleitung 6 an einer zum Heizen ausgebildeten Temperiervorrichtung 3 angeschlossen, wobei diese gemeinsame Vorlauflaufleitung 6 einen mit einem Regler 13 und einer Steuerung 8 wirkverbundenen Vorlauftemperaturfühler 11 umfasste. Jede der Temperieranordnungen 5,5' verfügte über eine individuelle Rücklauflaufleitung 7,7', die je einen mit dem Regler 13, mit der Steuerung 8 und mit je einem Stellglied 10,10' der Ventile 9,9' wirkverbundenen Rücklauftemperaturfühler 12,12' umfasste.

In diesem Beispiel wurde auf ein Abschlussventil 24 verzichtet. Ein Raumtemperaturfühler wurde zum Messen der Raumtemperatur verwendet, wobei dieses Messergebnis lediglich die Wirkung des Temperierverfahrens anzeigte, das Temperierverfahren selbst jedoch nicht beeinflusste. Als Temperaturdifferenz zwischen der Vorlauftemperatur und den Rücklauftemperaturen des Temperierfluids 2 wurde in der Steuerung 8 ein Betrag von 6 °C eingestellt, womit der Regler 13 ausgehend von dieser Temperaturdifferenz die Stellglieder 10,10' der Ventile 9,9' beider Heizkreise so zum Einstellen des Öffnungsgrades der Ventile 9,9' veranlasste, dass die mittlere Temperaturdifferenz zwischen den Vorlauftemperaturen und der Rücklauftemperatur des Temperierfluids 2 in diesem vorbestimmten Wertebereich lag. Der Fluss des Temperierfluids 2 bei geöffneten Ventilen 9,9' betrug ca. 2.5 l/min.

In der Figur 7 ist das Resultat dieses an einem Wohnraumboden mit zwei Heizkreisen durchgeführten Temperierverfahrens dargestellt:
- Der obere Graph zeigt die aktuelle IST-Temperatur (RT) des Wohnraums. Dabei ist auf der Abszisse die Zeit in Stunden (00.00 bis 12.00 Uhr) und auf der Ordinate die Raumtemperatur in Zehntelgraden und Fünfzigstelgraden Celsius dargestellt. Es darf festgestellt werden, dass diese Wohnraumtemperatur über eine Zeit von 12 Stunden (Mitternacht bis Mittag) sehr konstant auf 21.3 °C gehalten werden konnte, wobei diese Temperatur nur um +/- 0.1 °C von diesem Mittelwert abwich. Die gemessene Aussentemperatur betrug um Mitternacht (00.00 Uhr) -6 °C und am darauffolgenden Mittag (12.00 Uhr) +2 °C.
- Der untere Graph zeigt die Vorlauftemperatur (VL), die sich in einem Bereich von ca. 30 bis 36 °C bewegte. Dabei ist auf der Abszisse die Zeit in Stunden (00.00 bis 12.00 Uhr) und auf der Ordinate die Temperatur in Schritten von 3 °C dargestellt. Die beiden Rücklauftemperaturen (RL₁,RL₂) bewegten sich entsprechend der gewählten Temperaturdifferenz in einem Bereich von 24 bis 30 °C. Der untere Graph zeigt zudem die Stellgliedsignale (SG₁,SG₂) für die beiden Ventile 9,9'; wobei die unterschiedlichen Zeitpunkte des Veränderns dieser Signale (1/0 bzw. 0/1) belegen, dass jeder der beiden Heizkreise bzw. jede der beiden Temperieranordnungen 5,5' autonom, d.h. unabhängig vom anderen Heizkreis gesteuert wurde.

Dieses Beispiel zeigt, dass die Temperatur eines Wohnraums mit diesem relativ einfachen Temperierverfahren trotz unterschiedlichen Aussentemperaturen sehr exakt geregelt werden kann.

Die Figur 4 zeigt eine Auswahl von beispielhaften Stellglied/Regler-Kombinationen. Die Fig. 4A zeigt ein als Regler 13 ausgebildetes Bimetall-Stellglied 15. Dieser Bimetall-Stellglied/Regler 15 ist so zwischen der Vorlaufleitung 6 und der Rücklaufleitung 7 angeordnet, dass er die beiden Leitungen mit je einem der Komponenten des Bimetalls berührt. Die Berührung des Bimetall-Stellglied/Reglers 15 mit der Vorlaufleitung 6 und mit der Rücklaufleitung 7 ist so intensiv, dass jede Materialkomponente des Bimetall-Stellglied/Reglers 15 entweder die Vorlauftemperatur oder die Rücklauftemperatur annimmt. Dieser Bimetall-Stellglied/Regler 15 umfasst einen aus den beiden Komponenten des Bimetalls ausgeformten Hebel, der auf einen um etwa einen Hub 16 vorstehenden Teil des gefedert geführten Ventilkörpers des Ventils 9 drückt. Ist nun die Vorlauftemperatur höher als die Rücklauftemperatur, so biegt sich dieser Hebel in Richtung des Ventils 9 und bewegt den gefedert geführten Ventilkörper des Ventils 9 um einen Betrag, der gerade dem Temperaturunterschied entspricht. Diese Bewegung des Ventilkörpers bringt das Ventil 9 in eine vergrösserte Offenstellung, so dass mehr Temperierfluid 2 durch die Temperieranordnung 5 zirkulieren kann. Je näher die Rücklauftemperatur der Vorlauftemperatur kommt, desto mehr richtet sich der Bimetall-Hebel auf und erlaubt dem Ventilköper ein geringere Offenstellung im Ventil 9 einzunehmen. Durch eine geeignete Platzierung und eine entsprechend angepasste Geometrie des Hebels kann der mittlere Wertebereich des Temperaturunterschieds zwischen Vorlauf- und Rücklauftemperatur so eingestellt werden, dass er 1 °C bis 10 °C und vorzugsweise 2 °C bis 6 °C, beträgt, und dass durch diesen stromlosen Bimetall-Stellglied/Regler 15 geregelte Durchflüsse in den Temperieranordnungen 5,5' 0.2 l/min bis 10 l/min betragen.

Die Fig. 4B zeigt ein Expansions-Stellglied in Kombination mit einem Regler, der als Schmitt-Trigger ausgebildet ist. Der Schmitt-Trigger 17 ist eingangsseitig elektrisch mit dem Vorlauftemperaturfühler 11 und auch mit dem Rücklauftemperaturfühler 12 verbunden bzw. ausgangsseitig elektrisch mit dem Expansions-Stellglied 18 verbunden. Das Expansions-Stellglied 18 umfasst eine elektrische Heizung und eine in sich geschlossene Stellglied-Patrone mit temperaturabhängigem Volumen. Ist nun die Vorlauftemperatur höher als die Rücklauftemperatur, so stellt der Schmitt-Trigger 17 diesen Temperaturunterschied fest und er veranlasst die elektrische Heizung im Expansions-Stellglied 18 die Stellglied-Patrone so aufzuheizen, dass sich diese um einen entsprechenden Betrag (maximal um den Hub 16) ausdehnt. Dadurch wird der gefedert geführte Ventilkörper des Ventils 9 um einen Betrag bewegt, der gerade dem Temperaturunterschied entspricht. Diese Bewegung des Ventilkörpers bringt das Ventil 9 in eine vergrösserte Offenstellung, so dass mehr Temperierfluid 2 durch die Temperieranordnung 5 zirkulieren kann. Je näher die Rücklauftemperatur der Vorlauftemperatur kommt, desto geringer ist die vom Schmitt-Trigger 17 veranlasste Heizleistung und das Expansions-Stellglied 18 erlaubt dem Ventilköper ein geringere Offenstellung im Ventil 9 einzunehmen. Durch eine geeignete Auslegung des Schmitt-Triggers 17 und des Expansions-Stellglieds 18 kann der mittlere Wertebereich des Temperaturunterschieds zwischen Vorlauf- und Rücklauftemperatur so eingestellt werden, dass er 1 °C bis 10 °C und vorzugsweise 2 °C bis 6 °C, beträgt, und dass die Durchflüsse in den Temperieranordnungen 5,5' 0.2 l/min bis 10 l/min betragen.

Die Fig. 4C zeigt einen als Elektromotor ausgebildetes Stellglied in Kombination mit einem Differenz-Verstärker. Der Differenz-Verstärker 19 ist eingangsseitig elektrisch mit dem Vorlauftemperaturfühler 11 und auch mit dem Rücklauftemperaturfühler 12 verbunden bzw. ausgangsseitig elektrisch mit dem Elektromotor 20 des Stellglieds verbunden, das zudem eine Spindel umfasst. Ist nun die Vorlauftemperatur höher als die Rücklauftemperatur, so stellt der Differenz-Verstärker 19 diesen Temperaturunterschied fest und er veranlasst den Elektromotor 20 im Stellglied die Spindel so anzutreiben, dass sich diese um einen entsprechenden Betrag (maximal um den Hub 16) gegen das Ventil 9 bewegt. Dadurch wird der gefedert geführte Ventilkörper des Ventils 9 um einen Betrag bewegt, der gerade dem Temperaturunterschied entspricht. Diese Bewegung des Ventilkörpers bringt das Ventil 9 in eine vergrösserte Offenstellung, so dass mehr Temperierfluid 2 durch die Temperieranordnung 5 zirkulieren kann. Je näher die Rücklauftemperatur der Vorlauftemperatur kommt, desto geringer ist die vom Differenz-Verstärker 19 veranlasste Vorstellung der elektromotorisch angetriebenen Spindel und das Elektromotor-Stellglied 20 erlaubt dem Ventilköper ein geringere Offenstellung im Ventil 9 einzunehmen. Durch eine geeignete Auslegung des Differenz-Verstärkers 19 und der elektromotorisch angetriebenen Spindel kann der mittlere Wertebereich des Temperaturunterschieds zwischen Vorlauf- und Rücklauftemperatur so eingestellt werden, dass er 1 °C bis 10 °C und vorzugsweise 2 °C bis 6 °C, beträgt, und dass die Durchflüsse in den Temperieranordnungen 5,5' 0.2 l/min bis 10 l/min betragen.

Die Fig. 4D zeigt ein Solenoid-Stellglied in Kombination mit einem Mikroprozessor. Der Mikroprozessor 21 ist eingangsseitig elektrisch mit dem Vorlauftemperaturfühler 11 und auch mit dem Rücklauftemperaturfühler 12 verbunden bzw. ausgangsseitig elektrisch mit der Spule eines Solenoid-Stellglieds 22 verbunden, das zudem einen Kern umfasst. Ist nun die Vorlauftemperatur höher als die Rücklauftemperatur, so stellt der Mikroprozessor 21 diesen Temperaturunterschied fest und er veranlasst die Spule des Solenoid-Stellglieds 22 den Kern so anzutreiben, dass sich dieser um einen entsprechenden Betrag (maximal um den Hub 16) gegen das Ventil 9 bewegt. Dadurch wird der gefedert geführte Ventilkörper des Ventils 9 um einen Betrag bewegt, der gerade dem Temperaturunterschied entspricht. Diese Bewegung des Ventilkörpers bringt das Ventil 9 in eine vergrösserte Offenstellung, so dass mehr Temperierfluid 2 durch die Temperieranordnung 5 zirkulieren kann. Je näher die Rücklauftemperatur der Vorlauftemperatur kommt, desto geringer ist die vom Mikroprozessor 21 veranlasste Vorstellung des elektromagnetisch angetriebenen Kerns und das Solenoid-Stellglied 22 erlaubt dem Ventilköper ein geringere Offenstellung im Ventil 9 einzunehmen. Durch eine geeignete Auslegung des Mikroprozessors 21 und des elektromagnetisch angetriebenen Kerns kann der mittlere Wertebereich des Temperaturunterschieds zwischen Vorlauf- und Rücklauftemperatur so eingestellt werden, dass er 1 °C bis 10 °C und vorzugsweise 2 °C bis 6 °C, beträgt, und dass die Durchflüsse in den Temperieranordnungen 5,5' 0.2 l/min bis 10 l/min betragen.

Die Figur 5A zeigt in einem Temperatur/Zeit-Diagramm den Temperaturverlauf der Vorlauftemperatur **Tᵥ** und der Rücklauftemperatur **Tᵣ** bei einem konstanten Fluss des Temperierfluids von 2.5 l/min und mit einer daraus resultierenden, konstanten Temperaturdifferenz zwischen Vorlauftemperatur und Rücklauftemperatur von etwa 2.0 °C. Die Figur 5B zeigt in einem Temperatur/Zeit-Diagramm den Temperaturverlauf der Vorlauftemperatur **Tᵥ** und der Rücklauftemperatur **Tᵣ** bei einem konstanten Fluss des Temperierfluids von 0.5 l/min und mit einer daraus resultierenden, konstanten Temperaturdifferenz zwischen Vorlauftemperatur und Rücklauftemperatur von etwa 4.0 °C.

Aus den Figuren 5A und 5B wird somit ersichtlich, dass die Temperaturdifferenz zwischen dem Vorlauf und dem Rücklauf wesentlich durch den Durchfluss des Temperierfluids 2 mitbestimmt wird. Ein weiterer mitbestimmender Parameter ist insbesondere die Höhe der Vorlauftemperatur.

Die Figur 6 zeigt in einem Temperatur/Zeit-Diagramm den Temperaturverlauf der Vorlauftemperatur **Tᵥ** und der Rücklauftemperatur **Tᵣ** mit einer Regelung 8, bei der das Ventil 9 pulsweise geöffnet und wieder geschlossen wurde. Zudem zeigt die Fig. 6 in einem in der Zeitachse entsprechenden, darunter angeordneten Pulsdiagramm die jeweilige Stellung des Ventils 9. Gezeigt wird hier ein mögliches Regelverhalten, bei der die mittlere Spreizung der Vorlauftemperatur **Tᵥ** bzw. der Rücklauftemperatur **Tᵣ** direkt mit dem Stellglied 10 und mit dem diesem Stellglied 10 zugeordneten Ventil 9 dynamisch eingestellt wird. Dabei zeigt die obere Kurve die Vorlauftemperatur **Tᵥ,** die untere Kurve die Rücklauftemperatur **Tᵣ** und die Pulskurve das Stellgliedsignal auf, wobei **A** für 100% auf und **Z** für 0% auf steht. Erfindungsgemäss stellt der Regler 13 diesen Wert unabhängig vom Druck des Temperierfluids 2, unabhängig vom Durchfluss des Temperierfluids 2, unabhängig von der Vorlauftemperatur und unabhängig von der Temperatur der Temperiervorrichtung 3 ein. Die maximale totale Temperaturdifferenz zwischen der Vorlauftemperatur und der Rücklauftemperatur liegt bei etwa 6 °C, die maximale aktuelle Temperaturdifferenz zwischen der Vorlauftemperatur und der Rücklauftemperatur liegt bei etwa 5 °C und die mittlere resultierende Temperaturdifferenz zwischen der Vorlauftemperatur und der Rücklauftemperatur liegt bei etwa 4 °C.

Im Zusammenhang mit der vorliegenden Erfindung wird als Temperierfluid 2 jede Flüssigkeit, jedes Gas und jedes Gas-Flüssigkeits-Gemisch verstanden, die bzw. das zum Heizen (Zuführen von Energie) und/oder zum Kühlen (Abführen von Energie) und somit auch zum Transportieren von Energie bzw. Wärme verwendet werden kann. In Bodenheizungen kann beispielsweise eine Wasser-Frostschutz-Mischung verwendet werden und in Kühlkreisläufen wird oft eine Flüssigkeit mit einer hohen Verdampfungswärme-Kapazität benutzt. Als Temperiervorrichtungen 3 kommen beispielsweise ein Pellet-, Gas- bzw. ÖI-Brenner mit einem Heizkessel oder ein Kühlaggregat mit einem Kühlmittelbehälter in Frage.

Im Zusammenhang mit der vorliegenden Erfindung kann als zu temperierendes Bauteil 4 ein Boden oder mehrere Böden, eine oder mehrere Wände und/oder eine Decke oder mehrere Decken von Wohn- oder Arbeits-Räumen betrachtet werden. Diese Bauteile können beispielsweise auch bei Lagerräumen oder bei Ausstellungsräumen vorhanden sein. Diese Bauteile können aber auch als allein stehende, hängende oder liegende Heiz- oder Kühlwände ausgebildet sein.

Als beispielhafte fluidische Verbindung in Temperiersystemen 1,1' gelten hier Leitungen zum Leiten von Temperierfluiden, wie Rohre und dergleichen. Als beispielhafte elektrische Verbindungen in Temperiersystemen 1,1' gelten hier elektrische Kabel zum Leiten von elektrischen Signalen aber auch drahtlose Verbindungen zum Übertragen von elektronischen Daten oder Signalen.

Die Ventile 9,9' sind vorzugsweise als Fluss-Regelventile ausgebildet und weisen im offenen Zustand vorzugsweise immer einen minimalen Öffnungsgrad auf, der einen minimalen Fluss des Temperierfluids 2 von 0.1 bis 2 l/min bedingt. Zudem wird bevorzugt, dass die Stellglieder 10,10' gefederte Stössel umfassen. Speziell werden Stellglieder 10,10' bevorzugt, die je eine elektrische Heizung und je eine in sich geschlossene Stellglied-Patrone mit temperaturabhängigem Volumen umfassen.

Gleiche Bezugszeichen beziehen sich auf entsprechende Vorrichtungsmerkmale.

### Bezugszeichenliste

- 1,1': Temperiersystem
- 2: Temperierfluid
- 3: Temperiervorrichtung
- 4: Bauteil
- 5,5': Temperieranordnung
- 6: Vorlaufleitung, gemeinsame Vorlaufleitung
- 6',6": separate Vorlaufleitungen
- 7,7': Rücklaufleitung
- 8: Steuerung
- 9,9': Ventil
- 10,10': Stellglied
- 11: Vorlauftemperaturfühler
- 12,12': Rücklauftemperaturfühler
- 13: Regler
- 14: Thermostat
- 15: Bimetall-Stellglied/Regler
- 16: Hub
- 17: Schmitt-Trigger
- 18: Expansions-Stellglied
- 19: Differenz-Verstärker
- 20: Elektromotor, Elektromotor-Stellglied
- 21: Mikroprozessor
- 22: Solenoid-Stellglied
- 23: Vorlaufverteilerbalken
- 23': Rücklaufverteilerbalken
- 24: Abschlussventil

## Patentansprüche

1. Verfahren zum Temperieren eines Bauteils (4) mit einem Temperiersystem mit einer zum Heizen oder Kühlen eines Temperierfluids (2) ausgebildeten Temperiervorrichtung (3), **dadurch gekennzeichnet, dass** das Temperiersystem (1') zudem umfasst:
- 2 bis **n** Temperieranordnungen (5,5') zum Durchleiten des Temperierfluids (2) durch das zu temperierende Bauteil (4), wobei die 2 bis **n** Temperieranordnungen (5,5') über eine gemeinsame Vorlaufleitung (6) mit der Temperiervorrichtung (3) verbunden sind;
- 2 bis **n** Rücklaufleitungen (7,7') zum Rückleiten des Temperierfluids (2) von den 2 bis **n** Temperieranordnungen (5,5') zu der Temperiervorrichtung (3);
- 2 bis **n** Rücklauftemperaturfühler (12,12'), wobei jeder Rücklauftemperaturfühler (12,12') an oder in einer der Rücklaufleitungen (7,7') und ein Vorlauftemperaturfühler (11) an oder in der gemeinsamen Vorlaufleitung (6) angeordnet ist;
- eine Steuerung (8);
- 2 bis **n** Ventile (9,9'), die mit je einem Stellglied (10,10') ausgerüstet und in je eine separate Vorlaufleitung (6',6") nach einem Vorlauf-Verteilerbalken (23) oder in je eine der Rücklaufleitungen (7,7'), vorzugsweise vor einem optionalen Rücklauf-Verteilerbalken (23'), eingesetzt sind, wobei die Stellglieder (10,10') zum Einstellen eines Öffnungsgrades des jeweiligen Ventils (9,9') ausgebildet sind, und wobei die Steuerung (8) zum Ansteuern der Stellglieder (10,10') ausgebildet ist;
wobei die Steuerung (8) einen Regler (13) umfasst und der Regler (13) die jeweiligen individuellen Temperaturdifferenzen zwischen der gemeinsamen, durch den Vorlauftemperaturfühler (11) erfassten Vorlauftemperatur und den 2 bis **n** individuellen durch die Rücklauftemperaturfühler (12,12') erfassten Rücklauftemperaturen des Temperierfluids (2) erfasst, und
wobei der Regler (13), ausgehend von diesen individuellen Temperaturdifferenzen die Stellglieder (10,10') der 2 bis **n** Ventile (9,9') derart zum Einstellen des Öffnungsgrades dieser Ventile (9,9') veranlasst, dass die individuellen mittleren Temperaturdifferenzen zwischen der Vorlauftemperatur und der jeweiligen Rücklauftemperatur des Temperierfluids (2) in je einem vorbestimmten Wertebereich liegen, welcher 1 °C bis 10 °C beträgt,
und wobei das zu temperierende Bauteil (4) ein Boden, eine Wand oder eine Decke eines Wohn- oder Arbeits-Raums oder eine alleinstehende Heiz- oder Kühlwand ist.

2. Temperierverfahren nach Anspruch 1, **dadurch gekennzeichnet, dass** die durch den Regler (13) geregelten Wertebereiche der Temperaturdifferenzen und Durchflüsse in den 2 bis **n** Temperieranordnungen (5,5') unterschiedlich sind.

3. Temperierverfahren nach einem der vorhergehenden Ansprüche, **dadurch gekennzeichnet, dass** die vorbestimmten Wertebereiche der durch den Regler (13) geregelten Temperaturdifferenzen 2 °C bis 6 °C, betragen, **und dass** durch den Regler (13) geregelte Durchflüsse in den Temperieranordnungen (5,5') 0.2 l/min bis 10 l/min betragen.

4. Temperiersystem (1') zum Durchführen des Temperierverfahrens für ein Bauteil (4) gemäss einem der Ansprüche 1 bis 3 mit einer zum Heizen oder Kühlen eines Temperierfluids (2) ausgebildeten Temperiervorrichtung (3), **dadurch gekennzeichnet, dass** es zudem umfasst:
- 2 bis **n** Temperieranordnungen (5,5') zum Durchleiten des Temperierfluids (2) durch das zu temperierende Bauteil (4), wobei die 2 bis **n** Temperieranordnungen (5,5') über eine gemeinsame Vorlaufleitung (6) mit der Temperiervorrichtung (3) verbunden sind;
- 2 bis **n** Rücklaufleitungen (7,7') zum Rückleiten des Temperierfluids (2) von den 2 bis **n** Temperieranordnungen (5,5') zu der Temperiervorrichtung (3);
- 2 bis **n** Rücklauftemperaturfühler (12,12'), wobei jeder Rücklauftemperaturfühler (12,12') an oder in einer der Rücklaufleitungen (7,7') und ein Vorlauftemperaturfühler (11) an oder in der gemeinsamen Vorlaufleitung (6) angeordnet ist;
- eine Steuerung (8), die einen Regler (13) umfasst;
- 2 bis **n** Ventile (9,9'), die mit je einem Stellglied (10,10') ausgerüstet und in je eine separate Vorlaufleitung (6',6") nach einem Vorlauf-Verteilerbalken (23) oder in je eine der Rücklaufleitungen (7,7'), vorzugsweise vor einem optionalen Rücklauf-Verteilerbalken (23'), eingesetzt sind, wobei die Stellglieder (10,10') zum Einstellen eines Öffnungsgrades des jeweiligen Ventils (9,9') ausgebildet sind, und wobei die Steuerung (8) zum Ansteuern der Stellglieder (10,10') ausgebildet ist,
wobei das zu temperierende Bauteil (4) ein Boden, eine Wand oder eine Decke eines Wohn- oder Arbeits-Raums oder eine alleinstehende Heiz- oder Kühlwand ist.

## Claims

1. Method for controlling the temperature of a component (4) with a temperature-control system having a temperature-control device (3) designed for heating or cooling a temperature-control fluid (2), **characterized in that** the temperature-control system (1') also comprises:
- 2 to **n** temperature-control arrangements (5, 5') for conducting the temperature-control fluid (2) through the component (4) to be controlled in temperature, wherein the 2 to **n** temperature-control arrangements (5, 5') are connected to the temperature-control device (3) via a common supply line (6);
- 2 to **n** return lines (7, 7') for returning the temperature-control fluid (2) from the 2 to **n** temperature-control arrangements (5, 5') to the temperature-control device (3);
- 2 to **n** return temperature sensors (12, 12'), wherein each return temperature sensor (12, 12') is arranged on or in one of the return lines (7, 7') and a supply temperature sensor (11) is arranged on or in the common supply line (6);
- a control system (8);
- 2 to **n** valves (9, 9') which are each equipped with an actuator (10, 10') and are inserted each into one separate supply line (6', 6") downstream of a supply distributor bar (23) or each into one of the return lines (7, 7'), preferably upstream of an optional return distributor bar (23'), wherein the actuators (10, 10') are designed to set a degree of opening of the respective valve (9, 9'), and wherein the control system (8) is designed to actuate the actuators (10, 10');
wherein the control system (8) comprises a regulator (13) and the regulator (13) detects the respective individual temperature differences between the common supply temperature detected by the supply temperature sensor (11) and the 2 to **n** individual return temperatures of the temperature-control fluid (2) detected by the return temperature sensors (12, 12'), and
wherein the regulator (13), starting from these individual temperature differences, causes the actuators (10, 10') of the 2 to **n** valves (9, 9') to adjust the degree of opening of these valves (9, 9') in such a way that the individual mean temperature differences between the supply temperature and the respective return temperature of the temperature-control fluid (2) each lie in a predetermined value range, which is 1°C to 10°C,
and wherein the component (4) to be controlled in temperature is a floor, a wall or a ceiling of a living or working room or a stand-alone heating or cooling wall.

2. Temperature-control method according to claim 1, **characterized in that** the value ranges of the temperature differences and flows controlled by the regulator (13) are different in the 2 to **n** temperature-control arrangements (5, 5').

3. Temperature-control method according to one of the preceding claims, **characterized in that** the predetermined value ranges of the temperature differences controlled by the regulator (13) are 2°C to 6°C, **and in that** flows controlled by the regulator (13) in the temperature-control arrangements (5, 5') are 0.2 l/min to 10 l/min.

4. Temperature-control system (1') for carrying out the temperature-control method for a component (4) according to one of claims 1 to 3 with a temperature-control device (3) designed for heating or cooling a temperature-control fluid (2), **characterized in that** it further comprises:
- 2 to **n** temperature-control arrangements (5, 5') for conducting the temperature-control fluid (2) through the component (4) to be controlled in temperature, wherein the 2 to **n** temperature-control arrangements (5, 5') are connected to the temperature-control device (3) via a common supply line (6);
- 2 to **n** return lines (7, 7') for returning the temperature-control fluid (2) from the 2 to **n** temperature-control arrangements (5, 5') to the temperature-control device (3);
- 2 to **n** return temperature sensors (12, 12'), wherein each return temperature sensor (12, 12') is arranged on or in one of the return lines (7, 7') and a supply temperature sensor (11) is arranged on or in the common supply line (6);
- a control system (8) comprising a regulator (13);
- 2 to **n** valves (9, 9') which are each equipped with an actuator (10, 10') and are inserted each into one separate supply line (6', 6") downstream of a supply distributor bar (23) or each into one of the return lines (7, 7'), preferably upstream of an optional return distributor bar (23'), wherein the actuators (10, 10') are designed to set a degree of opening of the respective valve (9, 9'), and wherein the control system (8) is designed to actuate the actuators (10, 10');
wherein the component (4) to be controlled in temperature is a floor, a wall or a ceiling of a living or working room or a stand-alone heating or cooling wall.

## Revendications

1. Procédé pour tempérer un composant (4) avec un système de régulation de température comprenant un dispositif de régulation de température (3) conçu pour chauffer ou refroidir un fluide de régulation de température (2), **caractérisé en ce que** le système de régulation de température (1') comprend en outre :
- 2 à n agencements de régulation de température (5, 5') pour faire passer le fluide de régulation de température (2) à travers le composant à tempérer (4), les 2 à n agencements de régulation de température (5, 5') étant raccordés au dispositif de régulation de température (3) par le biais d'une conduite d'alimentation commune (6) ;
- 2 à n conduites de retour (7, 7') pour ramener le fluide de régulation de température (2) depuis les 2 à n agencements de régulation de température (5, 5') vers le dispositif de régulation de température (3) ;
- 2 à n capteurs de température de retour (12, 12'), chaque capteur de température de retour (12, 12') étant agencé sur ou dans l'une des conduites de retour (7, 7') et un capteur de température d'entrée (11) étant agencé sur ou dans la conduite d'alimentation commune (6) ;
- une commande (8) ;
- 2 à n soupapes (9, 9') équipées chacune d'un actionneur (10, 10') et chacune desquelles est monté dans une conduite d'alimentation séparée (6', 6") après un distributeur d'alimentation (23) ou chacune desquelles est monté dans une des conduites de retour (7, 7'), de préférence avant un distributeur de retour (23') optionnelle, les actionneurs (10, 10') étant conçus pour régler un degré d'ouverture de la soupape associée (9, 9'), et la commande (8) étant conçue pour commander les actionneurs (10, 10') ;
dans lequel la commande (8) comprend un régulateur (13) et le régulateur (13) enregistre les différences de température individuelles respectives entre la température d'entrée commune déterminée par le capteur de température d'entrée (11) et les 2 à n températures de retour individuelles du fluide de régulation de température (2) déterminées par les capteurs de température de retour (12, 12'), et
dans lequel le régulateur (13), sur la base de ces différences de température individuelles, déclenche les actionneurs (10, 10') des 2 à n soupapes (9, 9') de façon à régler le degré d'ouverture de ces soupapes (9, 9'), de sorte que les différences de température moyennes individuelles entre la température d'entrée et la température de sortie respective du fluide de régulation de température (2) est située dans une plage de valeurs prédéterminée qui va de 1 °C à 10 °C,
et dans lequel le composant à tempérer (4) est un sol, une paroi ou un plafond d'un espace de vie ou de travail ou bien un panneau chauffant ou réfrigérant seul.

2. Procédé de régulation de température selon la revendication 1, **caractérisé en ce que** les plages de valeurs des différences de température et des débits réglées par le régulateur (13) sont différentes dans les 2 à n agencements de régulation de température (5, 5').

3. Procédé de régulation de température selon l'une des revendications précédentes, **caractérisé en ce que** les plages de valeurs prédéterminées des différences de température réglées par le régulateur (13) vont de 2 °C à 6 °C, et **en ce que** les débits réglés par le régulateur (13) dans les agencements de régulation de température (5, 5') vont de 0,2 l/min à 10 l/min.

4. Système de régulation de température (1') pour effectuer le procédé de régulation de température pour un composant (4) conformément à l'une des revendications 1 à 3 avec un dispositif de régulation de température (3) conçu pour chauffer ou refroidir un fluide de régulation de température (2), **caractérisé en ce qu'**il comprend en outre :
- 2 à n agencements de régulation de température (5, 5') pour faire passer le fluide de régulation de température (2) à travers le composant à tempérer (4), les 2 à n agencements de régulation de température (5, 5') étant raccordés au dispositif de régulation de température (3) par le biais d'une conduite d'alimentation commune (6) ;
- 2 à n conduites de retour (7, 7') pour ramener le fluide de régulation de température (2) depuis les 2 à n agencements de régulation de température (5, 5') vers le dispositif de régulation de température (3) ;
- 2 à n capteurs de température de retour (12, 12'), chaque capteur de température de retour (12, 12') étant agencé sur ou dans l'une des conduites de retour (7, 7') et un capteur de température d'entrée (11) étant agencé sur ou dans la conduite d'alimentation commune (6) ;
- une commande (8) qui comprend un régulateur (13) ;
- 2 à n soupapes (9, 9') équipées chacune d'un actionneur (10, 10') et chacune desquelles est monté dans une conduite d'alimentation séparée (6', 6") après un distributeur d'alimentation (23) ou chacune desquelles est monté dans une des conduites de retour (7, 7'), de préférence avant un distributeur de retour (23') optionnelle, les actionneurs (10, 10') étant conçus pour régler un degré d'ouverture de la soupape associée (9, 9'), et la commande (8) étant conçue pour commander les actionneurs (10, 10') ;
dans lequel le composant à tempérer (4) est un sol, une paroi ou un plafond d'un espace de vie ou de travail ou bien un panneau chauffant ou réfrigérant seul.
